# EUROPEAN PATENT APPLICATION

(11) **EP 0 838 490 A2**
(43) Date of publication of application: **29.04.1998**
(21) Application number: 97308373.6
(22) Date of filing: 21.10.1997
(51) Int. Cl.: C08J 9/12, C09D 183/04

(54) **Method for bonding silicone elastomer to a substrate**

(30) Priority: 23.10.1996 GB 9622072
(71) Applicant: DOW CORNING S.A., B-7180 Seneffe (BE)
(72) Inventor: Decrucq, Laurent, 7350 Hensies (BE)
(74) Representative: Bullows, Michael

(57) **Abstract**

A method for bonding a silicone elastomer to a rubber substrate which comprises treating a surface of the rubber substrate with a tin compound which serves as a catalyst for a condensation reaction between an alkoxysilane and a polydiorganosiloxane having silanol groups and then applying to the treated surface a silicone composition formed by mixing a polydiorganosiloxane having terminal silanol groups with a silane having at least 3 alkoxy groups and a catalyst.

## Description

This invention relates to a method for bonding a silicone elastomer to a rubber substrate, particularly a silicone rubber substrate for structural glazing or curtain walling. The invention also relates to a composition for use in this method.

Structural glazing and curtain walling are known in the art as means of finishing facades. Structural glazing employs external panels of glass, aluminium, stone or other materials bonded to a building structure by bonding means comprising mechanical fastening or a combination of mechanical connectors and silicone elastomer sealant. It has now become a trend among architects to develop techniques to fix all four edges of the external panel in place without any mechanical support. In such applications, the sealant is required to have good and consistent adhesion to the external panel and the building frame to ensure structural integrity and safety of the structural glazing. A particularly well-known assembly is the so called Gemma curtain wall or structural glazing which uses a high consistency rubber gasket and a silicone elastomer as the bonding means.

Silicone elastomers are well-known materials that are used in numerous applications. One particular type of such materials (generally referred to as room temperature vulcanisable or RTV) have the ability to cure to an elastomer at normal ambient or slightly elevated temperature either spontaneously on mixing the components or as a result of exposure to atmospheric moisture. Silicone elastomer sealants selected for this purpose have sufficient elastic properties to accommodate thermal and structural movements of the building components. Although they are not affected by ultraviolet radiation and many environment factors, they sometimes suffer from a lack of consistency in their adhesion to some substrates, particularly rubber material and most particularly silicone rubber material which is subject to weathering variation and contamination.

In order to achieve the desired adhesion on a given substrate, it is a common practice to treat the substrate prior to application of the sealant in order to remove grease, dirt and grime and to condition the surface for receiving a primer and then the sealant. The substances used in this pretreatment step are usually organic solvents or mixtures thereof. Such solvents are often toxic or flammable and, thus, requiring special handling and storage. Their use is also undesirable from an environmental standpoint. For example, the solvent generally used to prepare the surfaces in a structural glazing assembly is methyl ethyl ketone. In addition, although organic solvents are effective degreasing and cleaning materials, their use does not, of itself, provide satisfactory adhesion consistency and retention of the adhesion during long term weathering. This is particularly true with humid weathering conditions and silicone rubber substrates.

GB patent specification 2,240,728 describes and claims a bonding method which is particularly useful for bonding silicone sealant compositions to aluminium. In this method, a polydiorganosiloxane is used to treat the aluminium substrate before application of the sealant composition thereon. While this procedure is effective to improve adhesion of the sealant composition to aluminium without using the aforesaid toxic or otherwise undesirable substances, we have found that this procedure is not effective to induce consistently good adhesion of the typical silicone sealants to cured silicone rubber.

There is therefore a need to provide means for enhancing the bond between a silicone elastomer formed by curing a silicone sealant composition and a silicone rubber substrate which not only avoids the use of toxic or otherwise undesirable substances, but which results in satisfactory and consistent adhesion between the silicone elastomer and the substrate.

The present invention provides in one of its aspects a method for bonding a silicone elastomer to a cured rubber substrate characterised in that the method comprises treating a surface of the rubber substrate with a tin compound capable of serving as a catalyst for a condensation reaction between an alkoxysilane and a polydiorganosiloxane having reactive silanol groups; applying to the treated surface of the rubber substrate a silicone composition formed by mixing a polydiorganosiloxane having terminal silanol groups, a crosslinking agent which is a silane having at least three alkoxy groups and/or a partial hydrolysis product of said silane and a catalyst; and bringing about curing of the silicone composition to form a silicone elastomer bonded to the rubber substrate.

The tin compounds which are used in the method of this invention may be any which are commonly used as catalysts for condensation reactions between an alkoxysilanes and polydiorganosiloxanes having reactive silanol groups. The Preferred materials are the tin salts or dialkyltin salts of carboxylic acids such as stannous octoate, dibutyl tin dilaurate and dioctyltin dilaurate.

If desired, the tin compound may be formulated as a surface treating composition consisting essentially of the tin compound dissolved or suspended in a liquid polydiorganosiloxane. Suitable polydiorganosiloxanes include those which are liquid at 25°C. They may be linear or cyclic in structure and, depending on their molecular configuration and chain length, may have from about two organic groups per silicon for the non organo end-stopped linear and the cyclic siloxanes, up to three such substituents as in the case of the hexaorganodisiloxanes. The linear liquid polydiorganosiloxanes are preferably end-stopped with triorganosiloxy units, for example, trimethylsiloxy, trimethylvinylsiloxy, methylphenylvinyl-siloxy or phenyldimethylsiloxy units. They may, however, be terminated with other groups such as, for example, silicon-bonded hydroxyl groups. Preferred liquid polydiorganosiloxane are the low molecular weight materials having a viscosity less than 100 mPa.s at 25°C, most preferably less than 10 mPa.s at 25°C.

The organic substituents present on the liquid polydiorganosiloxanes are selected from monovalent hydrocarbon groups and monovalent halogenated hydrocarbon groups, each having up to 18 carbon atoms. Examples of such organic substituent are alkyl groups such as methyl, ethyl, propyl, tetradecyl and octadecyl, alkenyl groups such as vinyl, allyl and hexenyl, aryl groups such as phenyl and naphtyl and halogenated alkyl groups such as trifluoropropyl. From a cost perspective, the preferred polydiorganosiloxanes are those wherein at least 50 percent of the total substituents are methyl groups.

Examples of preferred liquid polydiorganosiloxanes include trimethylsiloxy end-stopped polydimethylsiloxanes and cyclic methylsiloxanes. Specific examples include hexamethyldisiloxane, octamethyltrisiloxane, hexamethylcyclotrisiloxane, octamethylcyclotetrasiloxane, decamethylcyclopentasiloxane, dodecamethylcyclohexasiloxane and siloxanes represented by the formula R₃SiO(R₂SiO)ₙSiR₃ in which R represents the methyl group and n has a value from 1 to about 16.

The liquid polydiorganosiloxane may also be a mixture. For example, while hexamethylcyclotrisiloxane is a solid at normal ambient temperatures, it may be used in mixture with a polydiorganosiloxane such as methylcyclopentasiloxane which is a liquid at the working temperature.

In a method according to the invention, the rubber substrate may be chosen from a wide variety of rubber substrates. These include, for example, polybutadiene, polyisoprene, polychloroprene, nitrile rubber, EPDM rubber, polyacrylate rubber, polyurethane, fluoroelastomer, epichlorydrin rubber and silicone rubber. The method is particularly suited to treatment of so-called high consistency silicone rubber substrates and, more particularly, to high consistency silicone rubber used in the construction industry.

In a method according to the invention, treatment of the rubber substrate may be achieved using any suitable application technique such as, for example, by brushing, spraying, immersion or by rubbing with a cloth soaked in the composition of the invention. In cases where the substrate has visible dirt and grime thereon, it is preferred to apply the tin compound in combination with the liquid polydiorganosiloxane with an abrasive or rubbing action to ensure proper cleaning in addition to the conditioning effect. In contrast to the prior methods employing organic solvents, it is not necessary to wait until the substrate has dried before applying the elastomer-forming composition.

The silicone composition which is applied to the treated substrate in a method according to the invention can be any silicone composition which is capable of conversion to an elastomer at or about ambient temperatures (e.g., about 20 to 25°C) with an organic compound of tin as the crosslinking catalyst. Conversion may occur on mixing the separately packaged active ingredients (so called two component type) or it may require exposure to moisture (one component type). Preferred are moisture curable silicone compositions.

Compositions of the RTV-type generally comprise an organosiloxane polymer having reactive terminal groups, e.g. hydroxyl or alkoxyl, together with a crosslinking agent for the polymer and a catalyst, preferably an organic compound of tin. Although the silicone composition may utilise any room temperature curing reaction, the method of the invention is particularly adapted to the bonding of the so-called two component RTV's which normally exhibit poor adhesion on rubber substrates.

The preferred silicone compositions are, therefore, those that comprise a mixture of a polyorganosiloxane having terminal silanol (SiOH) groups, an alkoxysilane or siloxane as crosslinking agent such as, for example, methyltrimethoxysilane, ethylpolysilicate or npropylsilicate, and a metal salt of a carboxylic acid such as, for example, stannous octoate, dibutyl dilaurate or dioctyltin dilaurate. As is well known, such compositions are normally prepared and stored as two packages, the packages being mixed at the point of use. The proportions in which the components of such compositions are employed are well-known in the art. For example, the crosslinking agent and the metal salt catalyst will normally be employed in proportions of from 0.2 to 20 and 0.05 to 5 parts by weight, respectively, per 100 parts by weight of silanol-terminated polydiorganosiloxane.

If desired, the silicone composition may contain fillers (for example, silicas, clays and calcium carbonate), other conventional ingredients, and additives for improving the adhesion of the cured elastomer to the substrate. Known adhesion additives include silanes having silicon-bonded reactive groups such as aminoalkylalkoxy silanes and epoxyalkylalkoxy-silanes.

The invention provides in another of its aspects a surface treating composition consisting essentially of a liquid polydiorganosiloxane and a tin compound capable of serving as a catalyst for a condensation reaction between an alkoxysilane and a polydiorganosiloxane having reactive silanol groups.

In order that the invention may become more clear there follows a number of examples selected to illustrate the present invention. Unless the context otherwise requires all parts are by weight.

### EXAMPLE 1

This example provides a comparison between the results achieved by a method according to the invention and a similar method in which no surface treating composition was used.

In the method according to the invention, a rubber substrate was treated with a surface treating composition comprising a tin compound capable of serving as a catalyst for a condensation reaction between an alkoxysilane and a polydiorganosiloxane having reactive silanol groups. A silicone composition was applied on top of the treated surface of the rubber and allowed to cure to form a silicone elastomer bonded to the rubber substrate.

The silicone composition employed as the elastomer forming composition was a two component type and was obtained by mixing together a silanol-terminated polydimethylsiloxane having a viscosity of approximately 12,500 mPa.s (49.3 parts), surface treated calcium carbonate filler (49.7 parts), n-propyl orthosilicate crosslinking agent (2 parts), dibutyltin dilaurate catalyst (0.07 parts), aminopropyl-triethoxysilane (1.7 parts) adhesion improving additive and a small proportion of a trimethylsilyl end-stopped polydimethylsiloxane plasticiser.

The rubber surface was treated by wiping the working (elastomer-contacting) surface several times with a clean piece of absorbing paper soaked with the surface treating composition. This composition consisted essentially of 90% of a trimethylsilyl end blocked polydimethylsiloxane 1cSt and 10% dibutyltindilaurate. The substrate was allowed to dry at the laboratory ambient temperature.

The silicone composition was then applied without delay to each of the dry surfaces in sufficient quantity to provide a thick bead thereon. A wide aluminium mesh strip was then pressed into the silicone composition, leaving the tip of the mesh exposed. A further layer of the composition was applied over the strip and the composition pressed with a smooth metal tool to ensure good contact between the composition and the substrate. The applied composition was allowed to cure at about 22°C for 1 week and the test specimen was then divided into 3 parts; one which was immediately tested (test condition A), a second which was then immersed in demineralised water for 1 week at room temperature and then tested (test condition B) and a third which was immersed in demineralised water at 55°C for 1 week and then tested (test condition C).

The adhesion between the elastomer formed from the cured silicone and the substrate was then measured by a test in which the elastomer was gripped via the exposed tip of the mesh and was peeled back at a 180° angle from the aluminium substrate using a Zwick dynanometer. The results of the tests were assessed by ascribing a value of 2 in each case were bond failure was cohesive and a value 0 were bond failure was adhesive. A value of 1 was ascribed where 70% bond failure was cohesive. The force at break was also reported. Generally we prefer to a force a break value higher than 0.7 MPa for structural glazing applications.

The substrate used was a high consistency silicone rubber well-known in the construction industry. It is particularly used as gaskets in structural glazing and known under the trade name "Datwyler Profil No. 70496".

The values of the comparison are set out in the following Table 1.

**Table 1 :**

| Test conditions: | | A | B | C |
|---|---|---|---|---|
| without surface treatment | | | | |
| | evaluation | 2 | 0 | 0 |
| | force at break | - | - | - |

| with surface treatment | | | | |
|---|---|---|---|---|
| | evaluation | 2 | 2 | 2 |
| | force at break (MPa) | 1.2 | 1.1 | 0.9 |

It is clear from the results of the tests that the adhesion between the silicone elastomer and the high consistency rubber substrate was improved, particularly under wet conditions, when the method of the invention was used.

### EXAMPLE 2:

In this example, the quality of adhesion achieved by bonding a silicone elastomer to a cured rubber substrate treated with a liquid tin compound (hereinafter referred to as the Sn compound) capable of serving as a catalyst for a condensation reaction between an alkoxysilane and a polydiorganosiloxane having reactive silanol groups was compared with the quality of bond achieved in a similar method which uses a tetra butyl titanate.

The tin compound employed in this example was dibutyl tin dilaurate supplied under the trade name MEISTER ZL 4401. The tetra butyl titanate (hereinafter referred to as the Ti compound) was provided by TIOXIDE under the trade name TILCOM.

In each case, the silicone composition was the same as that used in Example 1.

Different rubber substrates referred to herein as Rubber 1 and Rubber 2, respectively, were used. Rubber 1 and Rubber 2 were each solid high consistency silicone rubber compounds. Rubber 1 contained silica filler as the sole filler whereas the Rubber 2 contained not only silica but also quartz.

The method was performed in the same way as in Example 1 and the same test conditions were applied as described in Example 1. The results of the test are as set out in the following Table 2:

**Table 2 :**

| | Ti compound | | Sn | |
|---|---|---|---|---|
| compound | | | | |
| Test conditions | A | B | A | B |
| Rubber 1 | 2 | 0 | 2 | 2 |
| Rubber 2 | 2 | 0 | 2 | 2 |

It is clear from the results of the test that the method in which dibutyltindilaurate was used as the treating composition yielded better bonds between the rubbers and the silicone elastomer.

## Claims

1. A method for bonding a silicone elastomer to a cured rubber substrate characterised in that the method comprises
treating a surface of the rubber substrate with a tin compound capable of serving as a catalyst for a condensation reaction between an alkoxysilane and a polydiorganosiloxane having reactive silanol groups;
applying to the treated surface of the rubber substrate a silicone composition formed by mixing a polydiorganosiloxane having terminal silanol groups, a crosslinking agent which is a silane having at least three alkoxy groups and/or a partial hydrolysis product of said silane and a catalyst; and
bringing about curing of the silicone composition to form a silicone elastomer bonded to the rubber substrate.

2. A method according to Claim 1 wherein the silicone composition is a moisture curable silicone composition.

3. A method according to either one of Claims 1 or 2 further characterised in that the tin compound is applied to the surface in admixture with a liquid polydiorganosiloxane.

4. A method according to either one of Claims 1, 2 or 3 further characterised in that the tin compound is dibutyltindilaurate.

5. A method according to any one of Claims 1 to 4 further characterised in that the rubber substrate is used for structural glazing purposes.

6. A method according to Claim 5 further characterised in that the rubbers substrate is a cured silicone rubber.

7. A cleaning and priming composition comprising a liquid polydiorganosiloxane characterised in that the composition also comprises a tin compound capable of serving as a catalyst for a condensation reaction between an alkoxysilane and a polydiorganosiloxane having reactive silanol groups.

8. A composition according to Claim 7 further characterised in that the organic groups on the liquid polydiorganosiloxane are independently selected from hydrocarbons and halogenated hydrocarbons, said organic groups having up to 18 carbon atoms.

9. A composition according to Claim 8 further characterised in that at least 50 percent of the total organic groups on the liquid polydiorganosiloxane are methyl groups.

10. A composition according to any one of Claims 7, 8 and 9 further characterised in that the liquid polydiorganosiloxane is a cyclic polymethylsiloxane.

11. A composition according to any one of Claims 7 to 10 further characterised in that the liquid polydiorganosiloxane has a viscosity of less than 10 mPa.s at 25°C

12. A method according to Claim 3 further characterised in that the polydiorganosiloxane is as specified in any one of Claims 8 to 11.
